# EUROPEAN PATENT SPECIFICATION

(11) **EP 1 125 773 B1**
(45) Date of publication and mention of the grant of the patent: **10.01.2007**
(21) Application number: 01301304.0
(22) Date of filing: 15.02.2001
(51) Int. Cl.: B60D 1/60

(54) **Anti-theft device**
Antidiebstahlvorrichtung
Dispositif antivol

(30) Priority: 15.02.2000 GB 0003297
(43) Date of publication of application: 22.08.2001
(73) Proprietor: SAS Manufacturing Limited, Membury, Berkshire RG17 7TJ (GB)
(72) Inventor: Jones, Chris, Swindon, Wiltshire (GB); Sworder, Malcolm, Swindon SN4 9JT, Wiltshire (GB)
(74) Representative: Gee, Steven William

(56) References cited:
- EP-A- 0 446 498
- DE-U- 9 319 824
- GB-A- 2 257 100
- US-A- 5 421 601
- US-A- 5 775 139

## Description

### FIELD OF THE INVENTION

This invention relates to an anti-theft device, and in particular to a device for reducing the likelihood of theft of a towed vehicle.

### BACKGROUND TO THE INVENTION

Many types of towed vehicle are known, for many different purposes and applications. However, there has become a significant degree of standardisation in the means of coupling the towed vehicle to the towing vehicle, enabling a single towing vehicle to be coupled to many different towed vehicles, and vice versa.

However, this standardisation also means that an unauthorised person can relatively easily tow away a towed vehicle, provided that the unauthorised person has a towing vehicle with a standard coupling.

The standard coupling is based upon a ball and socket connection, the towing vehicle being fitted with a "ball" of known dimensions, and the towed vehicle being fitted with a "socket" mechanism, generally referred to as a "hitch", which can accommodate and be secured to the ball.

### DESCRIPTION OF THE PRIOR ART

When seeking to prevent the theft of a towed vehicle, it is usual to seek to enclose the hitch, so that the ball of the unauthorised person's towing vehicle may not be inserted thereinto. In addition, most devices will also seek to prevent the unauthorised uncoupling of the hitch from the ball of an (authorised) towing vehicle, so that the theft of the towed vehicle is sought to be prevented whether that vehicle is already hitched to another towing vehicle, or is unhitched.

Many such devices are known, and amongst these are GB patent applications 2,055,140, 2,172,255, 2,210,343 2,218,678, 2,221,881, 2,236,513 and 2,257,100, and European patent application 0 446 498.

Of these known designs, most employ a housing or such like to shroud or enclose a part of the hitch and prevent the hitch from being operated, as well as means seeking to prevent the unauthorised removal of the housing.

In GB patent applications 2,210,343, 2,218,678 and 2,221,881, for example, an elongated bar is used to bridge across a housing, the bar fouling a part of the hitch if the housing is sought to be removed with the bar in place. A key-operated locking means is provided to retain the bar within the housing.

One disadvantage of these arrangements is that it is necessary to manipulate the bar so that it can correctly bridge across the housing, the bar passing between hitch components. Since it is intended that the housing have only limited movement when the bar is in place, the bar should be a tight fit upon the hitch and this makes the manipulation difficult to achieve. Also, since when the bar is correctly inserted it should project as little as possible from the housing (since any projecting part provides a means for an intending thief to seek to disable the device), manipulation before the bar is correctly inserted is made more difficult.

Another disadvantage is that the lock retains the bar against longitudinal removal of the bar, so that any force which an intending thief can impart to the bar in a longitudinal direction acts directly upon the locking element (which may be a projecting peg or lug of the lock, for example). It is often possible for an intending intruder to place sufficient longitudinal force upon the bar to break or deform the locking element so that the lock is disabled, and subsequent removal of the bar and then the housing, is substantially unhindered. In this regard, the chain which is provided for the bar of GB patent applications 2,210,343 and 2,221,881 provides a means for an intending thief to use a lever to apply a longitudinal force upon the bar.

GB patent application 2,172,255 and European patent application 0 446 498 both employ exposed padlocks to secure the respective devices to the hitch. Whilst padlocks are in widespread use they are not believed to be sufficiently secure to deter a determined thief. Thus, padlocks can be forced open by a suitable lever, or the hasp can be cut by a hacksaw for example. Once the padlock has been removed, the devices of these documents are rendered ineffective.

GB patent applications 2,055,140, 2,236,513 and 2,257,100 all utilise a pair of components which cooperate together to enclose at least part of the hitch. One component of each device is in the form of a housing to cover or shroud a part of the hitch (GB 2,257,100 has two cooperating housings), and another component seeks to prevent unauthorised removal of the housing. In each case, however, it is possible for an intending intruder to apply force (by way of a suitable lever) seeking to separate the two parts of the device, which force is transmitted directly to the locking element; with sufficient force the locking element can be broken or deformed sufficiently to disable the lock of each of these devices.

Since the hitch to which the device may be fitted can vary within certain limits between different manufacturers, it is not realistic for these devices to be made so as to be able to prevent a lever being inserted between the respective components of the device, and often parts of the hitch itself can be used to lever against.

In particular, with the device of GB 2,055,140, a force applied along the line of the shanks (perhaps by inserting a lever between the cap and the handle of the hitch, can be used forcibly to remove the shanks from the lock. With the device of GB 2,236,513, a lever inserted between the bottom of the hitch and the top of the block can be used to apply a shear load to the lock peg; since the peg is relatively small a sufficient force to break or bend the peg can be provided relatively easily. With the device of GB 2,257,100, a lever can readily be placed between the two housings, or between one of the housings and a part of the hitch, so as forcibly to release the locking element from behind the flange.

In addition, in the embodiments of GB 2,257,100 which are on the market, a suitable force applied to the exposed end of the lock can drive the whole of the lock into the volume enclosed between the housings, so disabling the lock.

German utility model number G 93 19 824.4 discloses another anti-theft device for a towed or towing vehicle, which has the features of the preamble of Claim 1.

### SUMMARY OF THE INVENTION

Therefore, there are significant disadvantages with all of the devices described above, and it is an object of the present invention to seek to reduce or avoid those disadavantages.

According to the invention therefore, there is provided an anti-theft device for a towed or towing vehicle, the device comprising:
a first part and a second part, the first and second parts being engageable together in an engaged condition in which the parts enclose a volume within which a part of a hitch mechanism of the vehicle can be located, one of the first and second parts having an element which can cooperate with a part of the hitch mechanism to prevent removal of the device whilst the first and second parts are in the engaged condition, the anti-theft device being adapted to resist forced separation of the first and second parts in a separation direction,
   one of the first and second parts carrying at least one projecting member, the other of the first and second parts having a channel means within which a part of the projecting member is located in the engaged condition,
   and lock means having an operative position and an inoperative position, the lock means in its operative position being able to secure the first and second parts in their engaged condition, the lock means having a body which is movable within a lock housing of the first part or the second part between its operative and inoperative positions, the direction of movement of the body within the lock housing being at an angle to the channel means,
characterised in that the at least one projecting member and the channel means are configured so that when the first and second parts are in the engaged condition separation of the first and second parts in the separation direction is resisted both when the lock means is in its operative position and in its inoperative position.

It can be arranged that the first and second parts are engaged by relative movement such that part of the projection passes along the channel; subsequently the first and second parts are secured together by movement of the lock. Since the path of movement of the lock is at an angle to the channel, attempts to force the first and second parts apart in the separation direction will be resisted by the projection and a wall of the channel, and attempts to force the first and second parts apart in other than the separation direction will be resisted by the body of the lock. Since forced movement in a direction other than the separation direction is resisted by the body of the lock (rather than merely by a locking element such as a peg or a cam thereof), unauthorised disabling of the lock is hindered or prevented.

Preferably, the path of movement of the lock is substantially perpendicular to the channel.

It can also be arranged that the ability of an intending thief to lever the first housing relative to the second housing in a direction in which this will be resisted by the lock body is made difficult. Thus, whilst it is accepted that it is not possible to prevent an intending intruder obtaining some leverage by which to force the first and second parts apart in the separation direction, it is arranged that the projection and channel wall resist forced separation in the direction of such leverage. It can of course be arranged that the projection and channel wall will be able to withstand considerable leverage forces.

Preferably, there is more than one projection, and correspondingly more than one channel.

Preferably, the first part comprises a "box" from which all or large part of two of the sides has been removed. Thus, all or part of one "end" of the box can be open so that the first part can be accommodated upon a hitch, with the frame member of the towed vehicle to which the hitch is secured passing through the open end. In addition, all or part of one "side" of the box can be removed to permit the entry and egress of the hitch. In such embodiments, the second part can comprise a plate adapted to close the open side of the first part.

Usefully, the first part has the channel(s), and the second part carries the projection(s). Usefully also, the or each projection is in the form of a stud, preferably a headed stud, the head of the stud being larger than the width of the channel, the shank of the stud being smaller than the width of the channel. Thus, in the engaged position the shank of the stud(s) will be located within the channel(s). In such embodiments, it is arranged that attempts to lever the first part away from the second part act along the length of at least one of the stud(s), and so are resisted by the head of the stud(s) engaging the walls of the (respective) channel.

Alternatively, an attempt to lever the first part away from the second part causes lateral movement of a stud, and so is resisted by the shank of the, or each, stud engaging a side wall of the channel.

In preferred embodiments, there are a number of studs set at different angles, so that attempts to lever the first part away from the second part act predominantly along the length of some of the studs and predominantly laterally upon the remainder of the studs. Ideally, the studs are set at perpendicular angles.

To accommodate a number of studs at different angles, certain of the channels can be open-ended, and include two orthogonal channel portions, whilst other of the channels are of "keyhole" form, including an enlarged portion able to accommodate the enlarged head of a stud.

### BRIEF DESCRIPTION OF THE DRAWINGS

The invention will now be described, by way of example, with reference to the accompanying drawings, in which:
- Fig.1: is an exploded view of the first and second parts of the anti-theft device;
- Fig.2: is a sectional view of part of the device adjacent the lock; and
- Fig.3: is a schematic representation of part of a towed and part of a towing vehicle, fitted with an antitheft device according to the invention.

### DESCRIPTION OF THE EXEMPLARY EMBODIMENTS

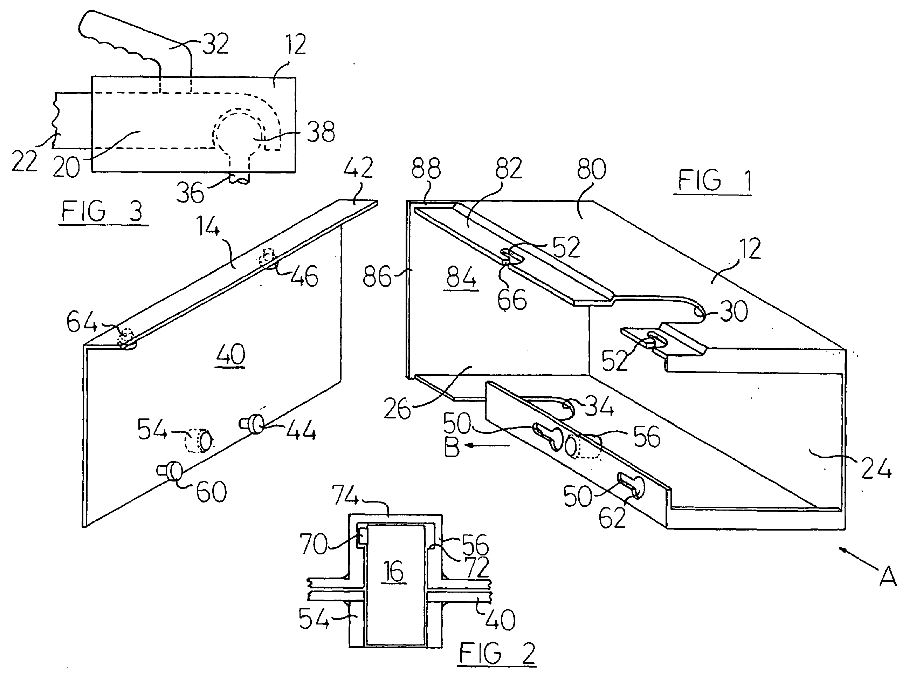

The anti-theft device comprises a first part 12, a second part 14, and a lock 16 (not shown in Fig.1, but see Fig.2) by which the first and second parts may be secured together.

The first part 12 is in the form of a "box", with an end and side thereof largely removed. As will be understood from Fig.3, the frame 22 by which the hitch 20 is mounted to the towed vehicle can be accommodated within the open end 24 of the first part 12. The open side 26 allows the first part to be placed around the hitch 20.

The first part 12 has an opening 30, which can accommodate a part of the operating handle 32 for the hitch, and a separate opening 34 which can accommodate a part of the mounting arm 36 of the ball 38 of the towed vehicle. It will be understood that the diameter of the ball 36 is greater than the width of the opening 34, so that the ball 36 cannot pass through the opening; ideally, the width of the opening 34 is only slightly greater than the diameter of the arm 36.

Similarly, the opening 30 is ideally only slightly greater than the breadth of the handle 32, but since the design of handles varies between manufacturers certain designs might have more freedom within opening 30 than others.

The openings 30 and 34 are open to the side 26, and this is necessary so that the first part can be fitted over the hitch, i.e. the first part 12 is fitted to the hitch from the side, i.e. moving into the paper in the orientation of Fig.3.

The device also includes second part 14, which is in the form of a flat plate 40 with a flange 42 at its top. The plate 40 carries two headed studs 44, and the flange 42 carries two headed studs 46, which are adapted to cooperate with the channels 50,52 of the first part, as described below.

The plate 40 also has a boss 54 which can receive the lock 16 (Fig.2); when the first 12 and second 14 parts are correctly engaged, the boss 54 is aligned with a boss 56 carried by the first part 12, and the lock 16 can occupy both of bosses 54 and 56, as shown in Fig.2.

When the first 12 and second 14 parts are correctly engaged, the second part 14 closes off the openings 30 and 34, preventing the first part 12 being removed from the hitch. In addition, one or both of the openings 30 and 34 acts to prevent the device being removed from the hitch 20 and/or the towing ball 38. Thus, if the device is fitted to a hitch alone (i.e. the towed vehicle is not coupled to a towing vehicle), the handle 32 will foul the wall surrounding the opening 30 if the device is sought to be removed other than following the (authorised) removal of the second part 14. If the device is fitted to a towed vehicle which is coupled to a towing vehicle, the respective walls surrounding both of the openings 30 and 34 will foul a part of the arm 36 and the handle 32 respectively. In addition, the device may be fitted to a towing vehicle which is not coupled to a towed vehicle, with the ball 38 secured within the first part 12 by way of the opening 34.

It will be noted that the studs 44 are arranged substantially perpendicular to the studs 46, and this is a particularly advantageous design feature. Thus, the channels 50 and 52 are arranged in perpendicular walls of the first part 12.

It will be understood that engagement of the second part 14 with the first part 12 requires the second part to be positioned so that each of the heads 60 of studs 44 enters the enlarged opening 62 connected to channel 50 (the channel 50 and the opening 62 being in the form of a "key-hole"), and the shank 64 of each respective stud 46 enters the entry-way 66 connected to channel 52. The second part is subsequently moved in the direction A relative to the first part 14, whereupon the studs 44 enter and move along the respective channels 50, and the studs 46 enter and move along the respective channels 52.

When the studs 44,46 have reached the end of their respective channels 50,52 the boss 54 will be aligned with the boss 56, permitting the lock 16 to be inserted thereinto. The lock 16 is of the type having a projecting peg 70, the peg being locatable behind a shoulder 72 in the boss 56. To retract the peg the correct key (not shown) must be inserted into the lock and rotated therewithin. The lock 16 may then be removed from the bosses 56 and 54 and temporarily retained (together with the inserted key) whilst the device is either removed from a hitch or ball, or is fitted thereto. A cross-pin or other means is provided (not shown in the drawings) to limit the rotation of the peg 70 (and thus the lock 16 within the boss 56), so that rotation of the key relative to the lock 16 can be properly effected.

In an alternative embodiment, the shoulder 72 is not provided, but is replaced by a hole through the wall of the boss 56, which hole can receive the peg 70 of the lock. It will be understood that when the peg is located within the hole, the lock body is prevented from rotation within the boss as well as unauthorised removal therefrom.

It will be understood that when the lock 16 is fitted into the bosses 54 and 56, attempts to lever the second part away from the first part in the direction opposed to the direction A will be resisted by the body of the lock. It is known that the body of a lock of the type described can be considerably resistant to shear loads of this type, so that all but the greatest of shear loads (corresponding to extreme leverages) can be resisted. Also, attempts to lever the second part away from the first part in the direction B, i.e. the "separation direction", and also the direction of movement of the lock 16, are resisted by the studs 44,46 and the walls of their respective channels 50,52. The studs 44,46 can of course be made of considerable strength, and can be as numerous as desired, so as to resist such attempted forcing.

It will be noted that the lock 16 is a sliding fit within the boss 54, and attempts to force the first part 12 away from the second part 14 in the direction B (which will seek to separate the bosses 54 and 56, will not be imparted to the peg 70 at all, so that this force is resisted totally by the studs and channels. However, if desired the lock 16 can have an escutcheon so as to limit its insertion into the boss 54, and in such cases the escutcheon will contribute to resisting the forcing movement described above.

It will also be noted that the boss 56 carries an end plate 74, limiting the insertion of the lock 16 into the boss 56. The presence of the end plate 74 prevents the lock 16 being forced further into boss 54 and subsequently through boss 56.

The top wall 80 of the first part 12 has a sunken portion 82, the sunken portion being adapted to receive the flange 42 of the second part 14. Thus, when the first 12 and second 14 parts are engaged, the flange 42 substantially fills the sunken portion and its upper surface is substantially flush with the remainder of the wall 80. In addition, the end wall 84 includes lips 86 and 88 which are similarly sized to the thickness of the plate 40 and flange 42. It is arranged that the plate 40 and flange 42 abut the lips 86,88 respectively when the first and second parts are correctly engaged. The sunken part 82 and the lips 86 and 88 serve to "smooth" out the outside surface of the fitted device, and so reduce the likelihood of an intending thief being able to insert a suitable lever between the first and second parts.

## Claims

1. An anti-theft device for a towed or towing vehicle, the device comprising:
a first part (12) and a second part (14), the first and second parts being engageable together in an engaged condition in which the parts (12, 14) enclose a volume within which a part of a hitch mechanism (20) of the vehicle can be located, one of the first and second parts having an element (30, 34) which can cooperate with a part (32, 36, 38) of the hitch mechanism to prevent removal of the device whilst the first and second parts are in the engaged condition, the anti-theft device being adapted to resist forced separation of the first and second parts in a separation direction (B),
one of the first and second parts carrying at least one projecting member (44,46), the other of the first and second parts having a channel means (50,52) within which a part of the projecting member is located in the engaged condition,
and lock means (16) having an operative position and an inoperative position, the lock means in its operative position being able to secure the first and second parts in their engaged condition, the lock means having a body which is movable within a lock housing (56) of the first part or the second part between its operative and inoperative positions, the direction of movement (B,-B) of the body within the lock housing being at an angle to the channel means,
**characterised in that** the at least one projecting member and the channel means are configured so that when the first and second parts (12, 14) are in the engaged condition separation of the first and second parts in the separation direction is resisted both when the lock means is in its operative position and in its inoperative position.

2. An anti-theft device according to claim 1, **characterised in that** the direction of movement (B,-B) of the body within the lock housing (56) is substantially perpendicular to the channel means (50,52).

3. An anti-theft device according to claim 1 or claim 2, **characterised in that** there is more than one projecting member (44,46), and correspondingly more than one channel means (50,52).

4. An anti-theft device according to claim 3, **characterised in that** the projecting members (44,46) are not parallel.

5. An anti-theft device according to claim 3 or claim 4, **characterised in that** at least two of the projecting members are substantially perpendicular.

6. An anti-theft device according to any one of claims 1-5, **characterised in that** the or each projecting member is in the form of a headed stud (44,46), a dimension of the head (60) of the stud being larger than the width of the channel means (50,52), a dimension of the shank (64) of the stud being smaller than the width of the channel means.

7. An anti-theft device according to claim 6, **characterised in that** at least one of the channel means (52) communicates with a slot (66) which is open to an edge of the first part (12), the slot being substantially perpendicular to the channel means, and **in that** at least one other channel means (50) communicates with an enlarged opening (62) able to accommodate the head (60) of a stud (44).

8. An anti-theft device according to any one of claims 1-7, **characterised in that** the first part (12) comprises a "box" from which all or large part of one end (24) and all or large part of one of the sides (26) has been removed.

9. An anti-theft device according to claim 8, **characterised in that** the second part (14) includes a plate (40) adapted substantially to close said one of the sides (26).

10. An anti-theft device according to claim 8 or claim 9, **characterised in that** the first part (12) has the channel means (50,52) formed therein, and the second part (14) carries the projecting member(s) (50,52).

## Patentansprüche

1. Eine Diebstahlsicherung für ein geschlepptes oder schleppendes Fahrzeug, wobei das Gerät das Folgende umfasst:
ein erstes Bauteil (12) und ein zweites Bauteil (14), wobei sich das erste und zweite Bauteil zusammen einkuppelbar in einem eingekuppelten Zustand befinden, in dem die Bauteile (12, 14) ein Volumen umschließen, innerhalb dem sich ein Bauteil eines Anhängerkupplungsmechanismus (20) des Fahrzeugs befinden kann, wobei eines des ersten und zweiten Bauteils über ein Element (30, 34) verfügt, das mit einem Bauteil (32, 36, 38) des Anhängerkupplungsmechanismus zusammenarbeiten kann, um eine Entfernung der Vorrichtung zu vermeiden, solange das erste und zweite Bauteil sich in dem eingekuppelten Zustand befinden, wobei die Diebstahlsicherung so ausgelegt ist, einer gewaltsamen Trennung des ersten und zweiten Bauteils in einer Trennrichtung (B) zu widerstehen,
wobei eines des ersten und zweiten Bauteils wenigstens ein herausragendes Element (44, 46) trägt und das andere des ersten und zweiten Bauteils über ein Rillenmittel (50, 52) verfügt, in dem sich bei einem eingekuppelten Zustand ein Teil des herausragenden Elements befindet,
sowie ein Sperrmittel (16) mit einer betriebsbereiten und einer nicht betriebsbereiten Position, wobei das Sperrmittel in seiner betriebsbereiten Position in der Lage ist, das erste und zweite Bauteil in deren eingekuppeltem Zustand zu sichern, wobei das Sperrmittel über einen Rumpf verfügt, der innerhalb eines Sperrgehäuses (56) des ersten Bauteils oder des zweiten Bauteils zwischen seiner betriebsbereiten und nicht betriebsbereiten Position beweglich ist, wobei die Richtung der Bewegung (B, -B) des Rumpfes innerhalb des Sperrgehäuses in einem Winkel zu dem Rillenmittel verläuft,
**dadurch gekennzeichnet, dass** wenigstens ein herausragendes Element und das Rillenmittel so ausgelegt sind, dass, wenn sich das erste und zweite Bauteil (12, 14) in dem eingekuppelten Zustand befinden, einer Trennung des ersten und zweiten Bauteils in der Trennungsrichtung widerstanden wird, sowohl wenn sich das Sperrmittel in seiner betriebsbereiten Position als auch in seiner nicht betriebsbereiten Position befindet.

2. Eine Diebstahlsicherung nach Anspruch 1, **dadurch gekennzeichnet, dass** die Richtung der Bewegung (B, -B) des Rumpfes innerhalb des Sperrgehäuses (56) im Wesentlichen senkrecht zum Rillenmittel (50, 52) verläuft.

3. Eine Diebstahlsicherung nach Anspruch 1 oder Anspruch 2, **dadurch gekennzeichnet, dass** mehr als ein herausragendes Element (44, 46) und somit mehr als ein Rillenmittel (50, 52) vorhanden sind.

4. Eine Diebstahlsicherung nach Anspruch 3, **dadurch gekennzeichnet, dass** die herausragenden Elemente (44, 46) nicht parallel sind.

5. Eine Diebstahlsicherung nach Anspruch 3 oder Anspruch 4, **dadurch gekennzeichnet, dass** wenigstens zwei der herausragenden Elemente im Wesentlichen senkrecht sind.

6. Eine Diebstahlsicherung nach einem der Ansprüche 1-5, **dadurch gekennzeichnet, dass** das oder jedes der herausragenden Elemente die Form eines Kopfbolzen (44, 46) hat, wobei eine Abmessung des Kopfes (60) des Bolzen länger als die Breite des Rillenmittels (50, 52) ist und eine Abmessung des Bolzenschaftes (64) kleiner als die Breite des Rillenmittels ist.

7. Eine Diebstahlsicherung nach Anspruch 6, **dadurch gekennzeichnet, dass** wenigstens eines der Rillenmittel (52) mit einer Nut (66) in Verbindung steht, die zu einer Ecke des ersten Bauteils (12) offen ist, wobei die Nut im Wesentlichen senkrecht zum Rillenmittel verläuft, und bei der wenigstens ein anderes Rillenmittel (50) mit einer vergrößerten Öffnung (62) in Verbindung steht, die in der Lage ist, den Kopf (60) des Bolzen (44) aufzunehmen.

8. Eine Diebstahlsicherung nach einem der Ansprüche 1-7, **dadurch gekennzeichnet, dass** das erste Bauteil (12) eine "Box" umfasst, aus der das gesamte oder der größte Teil des einen Endes (24) sowie die gesamte oder der größte Teil von einer der Seiten (26) entfernt wurden.

9. Eine Diebstahlsicherung nach Anspruch 8, **dadurch gekennzeichnet, dass** das zweite Bauteil (14) eine Platte (40) einschließt, die im Wesentlichen so ausgelegt ist, die besagte eine Seite (26) zu schließen.

10. Eine Diebstahlsicherung nach Anspruch 8 oder Anspruch 9, **dadurch gekennzeichnet, dass** das erste Bauteil (12) über die innerhalb desselben geformten Rillenmittel (50, 52) verfügt und das zweite Bauteil (14) das/die herausragende(n) Element(e) (50, 52) trägt.

## Revendications

1. Un dispositif antivol pour un véhicule remorqué ou de remorquage, le dispositif comprenant :
une première partie (12) et une seconde partie (14), les première et seconde parties pouvant être enclenchées ensemble en condition de couplage dans laquelle les parties (12, 14) renferment un volume à l'intérieur duquel une partie d'un mécanisme d'attelage (20) du véhicule peut être située, l'une des première et seconde parties possédant un élément (30, 34) qui peut fonctionner en association avec une partie (32, 36, 38) du mécanisme d'attelage pour empêcher le retrait du dispositif pendant que les première et seconde parties sont en condition de couplage, le dispositif antivol étant adapté pour résister à une séparation forcée des première et seconde parties dans une direction de séparation (B),
l'une des première et seconde parties comportant au moins un élément en saillie (44, 46), l'autre des première et seconde parties possédant un système de tunnel (50, 52) à l'intérieur duquel une partie de l'élément en saillie est située en condition de couplage,
et un système de fermeture (16) présentant une position opérationnelle et une position non opérationnelle, le système de fermeture dans sa position opérationnelle étant capable de sécuriser les première et seconde parties dans leur condition de couplage, le système de fermeture ayant un corps qui est déplaçable à l'intérieur d'un boîtier de fermeture (56) de la première partie ou de la seconde partie entre ses positions opérationnelle et non opérationnelle, la direction du mouvement (B, -B) du corps à l'intérieur du boîtier de fermeture étant à un angle du système de tunnel,
**caractérisé en ce que** ledit au moins un élément en saillie et le système de tunnel sont configurés de façon à ce que lorsque les première et seconde parties (12, 14) sont en condition de couplage la séparation des première et seconde parties dans la direction de séparation est empêchée lorsque le système de fermeture est dans sa position opérationnelle et lorsqu'il est dans sa position non opérationnelle.

2. Un dispositif antivol selon la revendication 1, **caractérisé en ce que** la direction du mouvement (B, -B) du corps à l'intérieur du boîtier de fermeture (56) est substantiellement perpendiculaire au système de tunnel (50, 52).

3. Un dispositif antivol selon la revendication 1, ou la revendication 2, **caractérisé en ce qu'**il y a plus d'un élément en saillie (44, 46), et de façon correspondante plus d'un système de tunnel (50, 52).

4. Un dispositif antivol selon la revendication 3, **caractérisé en ce que** les éléments en saillie (44, 46) ne sont pas parallèles.

5. Un dispositif antivol selon la revendication 3, ou la revendication 4, **caractérisé en ce qu'**au moins deux des éléments en saillie sont substantiellement perpendiculaires.

6. Un dispositif antivol selon l'une quelconque des revendications 1-5, **caractérisé en ce que** le ou chaque élément en saillie se présente sous la forme d'une vis à tête (44, 46), une dimension de la tête (60) de la vis étant plus grande que la largeur du système de tunnel (50, 52), une dimension de la tige (64) de la vis étant plus petite que la largeur du système de tunnel.

7. Un dispositif antivol selon la revendication 6, **caractérisé en ce qu'**au moins l'un des systèmes de tunnel (52) communique avec une encoche (66) qui est ouverte sur un bord de la première partie (12), l'encoche étant substantiellement perpendiculaire au système de tunnel, et **en ce qu'**au moins un autre système de tunnel (50) communique avec une ouverture élargie (62) capable de loger la tête (60) d'une vis (44).

8. Un dispositif antivol selon l'une quelconque des revendications 1-7, **caractérisé en ce que** la première partie (12) comprend un « compartiment » dont toute ou une grande partie d'une extrémité (24) et tout ou une grande partie de l'un des côtés (26) ont été retirés.

9. Un dispositif antivol selon la revendication 8, **caractérisé en ce que** la seconde partie (14) comprend une plaque (40) adaptée substantiellement pour fermer ledit un des côtés (26).

10. Un dispositif antivol selon la revendication 8 ou la revendication 9, **caractérisé en ce que** la première partie (12) possède, formé à cet endroit, le système de tunnel (50, 52), et la seconde partie (14) comporte l'élément/les éléments en saillie (50, 52).
